# EUROPÄISCHE PATENTSCHRIFT

(11) **EP 3 467 977 B1**
(45) Veröffentlichungstag und Bekanntmachung des Hinweises auf die Patenterteilung: **08.07.2020**
(21) Anmeldenummer: 18193648.5
(22) Anmeldetag: 11.09.2018
(51) Int. Cl.: H02G 3/04, H02G 3/06, A62C 3/16, A62C 3/06

(54) **BRANDSCHUTZKANALSTOSSABDICHTUNG SOWIE ALS BRANDSCHUTZKANAL AUSGELEGTE LEITUNGSFÜHRUNGSKANALANORDNUNG**
FIRE-PROTECTED CHANNEL SEAL AND LINE-GUIDING CHANNEL ARRANGEMENT DESIGNED AS FIRE PROTECTED CHANNEL
JOINT POUR CONDUITS PROTEGÉS CONTRE LE FEU ET SYSTÈME DE CONDUITS DE LIGNES CONÇU EN TANT QUE CONDUIT PROTEGÉ CONTRE LE FEU

(30) Priorität: 06.10.2017 DE 202017106070 U
(43) Veröffentlichungstag der Anmeldung: 10.04.2019
(73) Patentinhaber: OBO Bettermann Produktion Deutschland GmbH & Co.KG, 58710 Menden (DE)
(72) Erfinder: Fobbe, Stephan, 44137 Dortmund (DE)
(74) Vertreter: Haverkamp, Jens

(56) Entgegenhaltungen:
- EP-A1- 0 731 996
- EP-A1- 3 179 585
- EP-A2- 1 587 195
- DE-U1-202016 101 089
- US-A- 4 077 434
- US-A- 4 419 535
- US-B2- 6 768 050
- Anonymous: "Fire Protection Systems", , 25. Juli 2016 (2016-07-25), XP055538346, DOI: 10.5194/essd-8-605-2016 Gefunden im Internet: URL:https://obo-bettermann.com/documents/K atalog_BSS_en_2016.pdf [gefunden am 2019-01-04]

## Beschreibung

Die Erfindung betrifft eine Leitungsführungskanalanordnung gemäß Anspruch 1.

Leitungsführungskanäle, wie diese für die Verlegung von elektrischen Kabeln verwendet werden, sind mitunter als Brandschutzkanäle ausgelegt. Mit derartigen Brandschutzkanälen soll zum Einen ein Übergreifen eines Kabelbrandes auf den umliegenden Raum verhindert werden. Zum Anderen werden derartige Brandschutzkanäle eingesetzt, wenn ein Flammenübergriff aus einem Raum auf in dem Kanal befindliche Kabel verhindert oder zumindest jedoch zum Aufrechterhalten von Notfunktionen so lange wie möglich herausgezögert werden soll.

Derartige Leitungsführungskanäle sind Stahlblechteile, die aus einem Kanal- bzw. Rinnenteil und einem Deckelbauteil bestehen. Zum Erzielen der gewünschten Brandschutzwirkung können derartige Kanäle innenseitig mit feuerhemmenden Materialien, wie beispielsweise Steinwolle, Silikat oder Gipsplatten ausgekleidet sein. Aufgrund des Einbaus derartiger Platten wird das für eine Leitungs- bzw. Kabelverlegung nutzbare Kanalvolumen reduziert. Zum Anderen kann hierdurch eine Kabelbrandausbreitung in Längserstreckung des Kanals nicht verhindert werden. Gemäß einer anderen Ausgestaltung sind die Stahlblechbauteile innenseitig mit einer Intumeszenzmateriallage beschichtet. Intumeszenzmaterial hat die Eigenschaft, unter Hitzeeinwirkung aufzublähen. Derartige Materialien sind bekannt. Diese können flüssig auf die zu beschichtenden Stahlbauteilflächen aufgetragen werden, beispielsweise durch Spritzen, Streichen oder Rollen oder Kleben. Je nach gewünschter Feuerwiderstandsklasse wird dieses Material mit einer unterschiedlichen Schichtdicke aufgebracht. Die Schichtdicken betragen typischerweise zwischen etwa 0,5 bis 2 bis 3 mm. Bei Hitzeeinwirkung bläht im Bereich der Hitzeeinwirkung dieses Material auf und füllt das Kanalvolumen, so dass dann ein feuerausbreitungshinderndes Schott im Falle eines Kabelbrandes bereitgestellt ist. Das hohe Porenvolumen des geblähten Intumeszenzmaterials gewährleistet zudem eine Wärmeabschottung der in einem solchen Brandschutzkanal geführten Leitungen vor übermäßiger Erwärmung im Falle eines Raumbrandes. Ein solches Intumeszenzmaterial wird beispielsweise von der Firma svt-Brandschutz GmbH unter Brandschutzgewebe DG-CR angeboten.

Derartige Leitungsführungskanäle werden zu Leitungsführungssystemen verbaut. Bei diesen werden benachbarte Brandschutzkanäle stoßseitig aneinander angrenzend wand- oder deckenseitig montiert. Auch eine bodenseitige Montage ist möglich. Um die gewünschte Kaltrauchdichtigkeit zu erzielen, werden hutförmige, den Stoß übergreifende Verbinder aus Metall eingesetzt, die über dem Stoß benachbarter Kabelkanäle montiert werden. Diese Verbinder sind hutförmig ausgelegt und umgreifen die zuvor montierten und mit ihrem jeweiligen Deckelteil verschlossenen Kabelkanäle. Mit den nach außen abgestellte Abschnitten werden diese Verbinder ebenfalls wand- oder deckenseitig montiert. Diese Verbinder sind innenseitig mit einem Dichtmaterial, beispielsweise einem Schaum oder einem Vlies beschichtet, welches den Stoß übergreift und durch den Metallverbinder unter einer gewissen Vorspannung gegen die den Stoßspalt begrenzenden Bereiche der beiden Brandschutzkanäle wirkt. Aufgrund der wandseitigen Montage der Kanalelemente ist eine Abdichtung im Bodenbereich der Kanäle nicht erforderlich. Solche Verbinder sind beispielsweise auf Seite 121 des Kataloges aus 2016 "Fire protection systems" von OBO Bettermann offenbart.

Bekannt ist eine abgedichtete Leitungsführungskanalanordnung auch aus US 4,077,434 B. Dieser Leitungsführungskanal ist gegenüber Öl an seinen jeweiligen Stößen abgedichtet. Hierzu wird auf herkömmliche öldichte Materialien zurückgegriffen. Eine Verbindung von zwei Kanälen erfolgt durch einen U-förmigen Innenverbinder, sowie einem darauf aufgesetzten, nach Außen in Erscheinung tretenden Deckelverbinder.

DE 20 2016 101 089 U1 offenbart eine Installationsbox zum Durchleiten einer Installation und zur Bereitstellung eines im Brandfalle selbsttätig die Brandseite abschottenden Verschlusskörpers.

EP 3 179 585 A1 offenbart Leitungsführungskanäle ohne Deckel, die an ihrer offenen Seite mit einem Intumeszenzmaterial ausgestattet sind, welches in einem Brandfalle aufbläht und die Öffnung dadurch verschließt.

US 4,419,535 B1 offenbart eine Wanddurchführung, wobei diese innenseitig mit Intumeszenzmaterial ausgekleidet ist.

Zwar lässt sich durch Einsatz derartiger Verbinder die gewünschte Kaltrauchdichtigkeit herstellen. Allerdings wird mitunter der Montageaufwand als zu hoch angesehen. Schließlich müssen zur Montage eines jeden solchen Verbinders wand- oder deckenseitig jeweils zwei Löcher gebohrt werden, um die Verbinder montieren zu können. Überdies ist bei der Auslegung des Leitungsführungssystems darauf zu achten, dass die Deckelteilstöße sich an den Stößen der Kanäle befinden. Ist dies nicht der Fall, muss zusätzlich an dem Stoß der benachbarten Deckelteile ein weiterer Verbinder der vorgenannten Art montiert werden. Vorteilhaft bei der Ausgestaltung derartiger Brandschutzkanäle ist, dass diese zum Verbinden zweier Brandschutzkanäle keinen den Innendurchmesser verkleinernden oder vergrößernden Verbindungsabschnitt aufweisen müssen. Dieses ist bei anderen als Brandschutzkanälen ausgelegten Kabelkanälen der Fall. Bei diesen ist jeweils ein Endabschnitt unter Reduzierung des Kanalinnenvolumens nach innen zur Ausbildung eines Verbindungsabschnittes verkröpft, damit dieser in den unverkröpften Abschnitt des benachbarten Kanals eingeschoben werden kann. Bei Brandschutzkanälen dieser Art kann durch das Einschieben des Verbindungsabschnittes des einen Kanals in den anderen die Intumeszenzmateriallage beschädigt werden.

Bei Brandschutzkanälen ist es erforderlich, dass die stoßseitig miteinander verbundenen oder aneinandergrenzenden Kabelkanäle elektrisch miteinander verbunden sind. Dieses erfolgt entweder durch eine Schraubkontaktierung eines elektrischen Erdungskabelabschnitts an den beiden aneinandergrenzenden Brandschutzkanäle. Bei anderen Ausgestaltungen weist jeder Brandschutzkanal im Bereich seines Endes eine Steckerzunge auf, auf die zum Herstellen der elektrischen Kontaktierung ein mit komplementären Steckschuhen ausgerüsteter Erdungskabelabschnitt aufgesetzt wird.

Ausgehend von dem vorstehend diskutierten Stand der Technik wäre es wünschenswert, wenn eine den Anforderung genügende Verbindung zweier stirnseitig zueinander zu montierender Brandschutzkanäle vereinfacht werden könnte. Der Erfindung liegt daher die Aufgabe zugrunde, eine Leitungsführungskanalanordnung mit zwei stirnseitig benachbart zueinander angeordneten Brandschutzkanälen vorzuschlagen, die bezüglich der Stoßabdichtung dem Vorstehenden Rechnung tragen.

Gelöst wird diese Aufgabe erfindungsgemäß durch eine eingangs genannte, gattungsgemäße Leitungsführungskanalanordnung mit den Merkmalen des Anspruchs 1.

Gelöst wird diese Aufgabe auch durch ein Verfahren zur Montage einer Stoßabdichtung für eine solche Leitungsführungskanalanordnung mit den Merkmalen des Anspruchs 11.

Bei dieser Leitungsführungskanalanordnung ist die Brandschutzkanalstoßabdichtung ist als Innenabdichtung ausgeführt. Hierdurch ist eine zusätzliche wand- oder deckenseitige Montage von Verbindern vermieden. Diese Stoßabdichtung umfasst zwei Seitenteile, ein Bodenteil und ein Deckelteil. Diese sind typischerweise als separate Teile gefertigt und werden im bzw. am Brandschutzkanal zur Ausbildung der Stoßabdichtung zusammengesetzt. Somit kann eine solche Stoßabdichtung an dem Stoßspalt zweiter in Längserstreckung aneinandergrenzender oder benachbart zueinander angeordneter Brandschutzkanäle montiert werden, wenn diese bereits wand- oder deckenseitig montiert sind. Für diese Montage ist ein Verschieben von an der Stoßabdichtung beteiligter Teile in Längserstreckung des Kanals nicht erforderlich, sodass das an den Innenseiten dieser Teile befindliche Intumeszenzmaterial nicht beschädigt wird. Genutzt wird bei diesem Konzept das Vorhandensein von an den Seitenwänden des Kanals vorhandenen Deckelanschlussschienen. Bei diesen Schienen handelt es sich um etwa U-förmige, typischerweise zum Boden hin leicht hinterschnittene Aufnahmen, in die ein Deckelteil mit seinen beiden abgekanteten Seitenwangen eingreift und unter Verwendung von Verriegelungsklammern darin gehalten ist. Die Außenwandseiten dieser Deckelanschlussschienen bilden ausgehend von dem oberen Abschluss eines solchen Brandschutzkanals benachbart zu seiner oberen Öffnung in Richtung zu seinem Boden hin abragende Vorsprünge. Zwischen jede Deckelanschlussschiene und der benachbarten Seitenwand des Brandschutzkanals ist auf diese Weise eine nach unten offene Aufnahme mit einer definierten, gleichbleibenden Breite bereitgestellt. Die Außenseite der Deckelanschlussschiene ist nicht mit einer Intumeszenzmateriallage beschichtet. Diese Aufnahme ist vorzugsweise durch eine entsprechende Neigung der zur Seitenwand des Kanals gerichteten Wand der Deckelanschlussschiene ebenfalls hinterschnitten. Diese der Längserstreckung jeder Seitenwand des Brandschutzkanals folgende Aufnahme wird vorzugsweise zur Montage der Seitenteile der Stoßabdichtung genutzt. Die Seitenteile der Stoßabdichtung tragen an ihrer diesbezüglichen Längsseite eine Passung, mit der diese gegen eine intumeszenzfreie Außenseite der Deckelschiene wirken. Diese Passung ist in ihrer Dimensionierung ausgelegt, dass das von dem Seitenteil rückseitig getragene Dichtmaterial nach Einführen der Passung des Seitenteils in die vorbeschriebene Seitenteilaufnahme des Brandschutzkanals mit einer gewissen Vorspannung gegen die Innenseite der Seitenwand des Brandschutzkanals wirkt. Ausgenutzt wird hierbei die Materialelastizität des Dichtmaterials. In gleicher Weise wirkt sodann die Passung des Seitenteils der Stoßabdichtung gegen die intumeszenzmaterialfreie Außenseite der Deckelanschlussschiene mit Vorspannung, wodurch die gewünschte elektrische Kontaktierung erfolgt und sichergestellt ist. Die Seitenteile und das Bodenteil der Stoßabdichtung erstrecken sich über den Stoß zweier Brandschutzkanäle hinweg. Zumindest im Bereich des überbrückten Stoßes trägt jedes Teil an seiner Außenseite eine Dichtmasse, beispielsweise in Schaumstoff- oder Vliesstreifen für die Bereitstellung der gewünschten Kaltrauchabdichtung.

In die zwischen der Deckelschiene und der Seitenwand befindliche Seitenteilaufnahme des Brandschutzkanals ist ein solches Seitenteil mit seiner Passung einschwenkbar. Beide Seitenteile verfügen über jeweils zumindest eine, typischerweise über zwei im Bereich ihres unteren, zum Boden eines Brandschutzkanals weisenden Endes ausgestellte Verriegelungslaschen. An diesen wird das Bodenteil verriegelt, welches sich an den Seitenteilen in Querrichtung der Kanallängserstreckung abstützt. Die Breite des Bodenteils, also: seine Erstreckung quer zur Längserstreckung der Brandschutzkanäle, ist vorzugsweise so bemessen, dass in Folge dieser Abstützung auf den unteren Abschnitt jedes Seitenteils eine gewisse Vorspannung wirkt, durch die das auf der Rückseite des Seitenteils befindliche Dichtmaterial gegen die Innenseiten der benachbarten Seitenwände der beiden Brandschutzkanäle gepresst wird.

Von besonderem Vorteil bei der Ausbildung der Stoßabdichtung zweier stoßseitig aneinandergrenzender Brandschutzkanäle ist, dass sich mit dieser nicht nur die Kaltrauchabdichtung und die elektrische Kontaktierung ergeben, sondern sich diese Stoßabdichtung werkzeuglos und ohne Einsatz zusätzlicher Befestiger ausbilden lässt.

Neben den beiden Seitenteilen und dem Bodenteil verfügt die Brandschutzkanalstoßabdichtung des Weiteren über ein Deckelteil. Auch zur Montage des Deckelteils werden die Deckelanschlussschienen genutzt. Das Deckelteil hat ebenso wie die Seitenteile eine Längserstreckung, durch die der Stoßspalt überbrückt ist. An seinem einen Ende trägt das Deckelteil zwei in Querrichtung zur Längserstreckung des Brandschutzkanals seitlich abragende Hakenelemente, mit denen die Deckelanschlussschienen untergriffen werden. Eine dem Deckelteil zugehörige Deckelplatte trägt oberseitig das für die Kaltrauchdichtigkeit vorgesehene Dichtmaterial. Die Deckelplatte verfügt des Weiteren über zwei Auflagefortsätze, die auf der innenseitigen oberen, die Deckelschiene bildenden Wand aufliegen. Diese, typischerweise als Fortsätze ausgeführten Auflagen sind mit Abstand zu den Hakenelementen angeordnet. Somit kann das Deckelteil ebenfalls ohne zusätzliche Verbinder montiert werden. Von besonderem Vorteil ist, dass das Deckelteil unabhängig von den beiden Seitenteilen und dem Bodenteil montierbar ist. Dieses kann daher an beliebiger Stelle im Verlauf des Brandschutzkanals angeordnet werden, sodass eine Stoßabdichtung des Deckels durchaus an anderer Stelle erfolgen kann als die Stoßabdichtung des eigentlichen Kanals. Die Klemmverbindung zwischen den einzelnen Teilen der Stoßabdichtung gewährleistet, dass die Kaltrauchdichtigkeit auch dann beibehalten bleibt, wenn die stoßseitig aneinandergrenzenden Brandschutzkanäle aufgrund ungleicher Gewichtsbelastung verstellt werden. Die beiden Seitenteile und das Bodenteil sind in Bezug auf derartige Brandschutzkanalverstellungen gelenkig aneinander abgestützt. Das Deckelteil ist unabhängig von den beiden Seitenteilen und dem Bodenteil an dem Brandschutzkanal gehalten und daher von den Seitenteilen bezüglich derartiger Bewegungen entkoppelt.

Die Passung der Seitenteile ist typischerweise U-förmig oder weitestgehend U-förmig ausgeführt, und zwar als entsprechende Abwicklung des Endabschnittes derselben. Die auf die zusammenwirkenden elektrischen Kontaktflächen wirkende Vorspannung kann dadurch erhöht werden, dass der Abstand des freien Endes des einen Schenkels der Passung von dem Seitenteil etwas größer ist als der Abstand der Außenseite der zur Seitenwand weisenden Deckelschiene zu der Seitenwand des Brandschutzkanals, wobei in diese Dimensionierung auch das am Seitenteil befindliche Dichtmaterial zu berücksichtigen ist. Bei einer solchen Ausgestaltung ist der Klemmschluss, mit dem die Passung in die brandschutzkanalseitige Seitenteilaufnahme eingreift entsprechend höher.

Zur weiteren Verbesserung der elektrischen Kontaktierung kann die zu der Außenwand der Deckelschiene weisende Seite der Passung wulst- oder sickenartige Vorsprünge aufweisen. Hierdurch erfolgt eine Konzentration der durch die Vorspannung bereitgestellten Kraft auf diese Elemente, wodurch der elektrische Kontaktierungsdruck verbessert ist.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht eines Brandschutzkanals mit einer Stoßabdichtung,
- **Fig. 2:**: der Brandschutzkanal der Figur 1 ohne sein Deckelteil bei der Montage der Stoßabdichtung,
- **Fig. 3:**: eine perspektivische Darstellung der fertig montierten Stoßabdichtung in den Brandschutzkanal und
- **Fig. 4:**: eine perspektivische Darstellung des rinnenseitigen Teils der Stoßabdichtung in Alleindarstellung.

Ein als Leitungsführungskanal vorgesehener Brandschutzkanal 1 ist aus einer Stahlblechplatine gefertigt. Der Brandschutzkanal 1 umfasst einen Boden 2, durch den die Breite des Brandschutzkanals 1 bestimmt ist und zwei daran angeformte Seitenwände 3, 3.1. Zusammen mit dem Boden 2 fassen die Seitenwände 3, 3.1 das Nutzvolumen des Brandschutzkanals 1 ein. Die Seitenwände 3, 3.1 und der Boden 2 sind mit einer Intumeszenzmateriallage beschichtet. Bei dem dargestellten Ausführungsbespiel weist diese eine Materialstärke von etwa 1 bis 1,2 mm auf. Die Seitenwände 3, 3.1 tragen oberseitig und damit an ihrem von dem Boden 2 wegweisenden oberen längsseitigen Abschluss jeweils eine Deckelanschlussschiene 5, 5.1, die an einem von der flächigen Abstreckung der jeweiligen Seitenwand 3 bzw. 3.1 parallel zum Boden 2 abgewinkelten Schenkel 6, 6.1 angeformt sind. Die Deckelanschlussschienen 5, 5.1 sind mit ihrer Öffnung nach oben weisend weitestgehend U-förmig ausgeführt, um auf diese Weise einen nach oben offenen Anschlusskanal 7, 7.1 bereitzustellen. Die Anschlusskanäle 7, 7.1 sind mit einem gewissen Hinterschnitt ausgehend von ihrer oberseitigen Öffnung ausgeführt. Die Intumeszenzmateriallage 4 erstreckt sich bis zum Abschluss der Schenkel 6, 6.1.

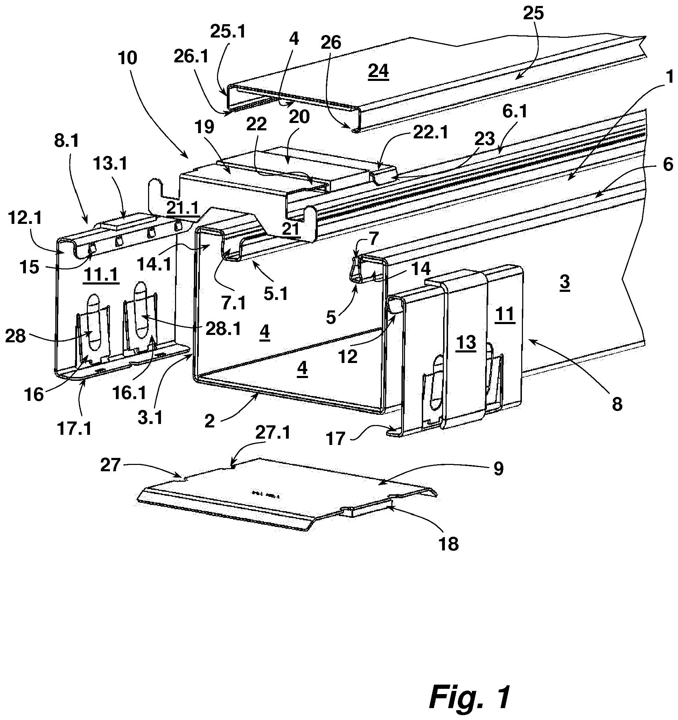

In Figur 1 ist der Brandschutzkanal 1 im Bereich seines einen Endes gezeigt. Dieses Ende bildet einen Stoß. Angrenzend an den Stoß grenzt ein weiterer, in den Figuren nicht dargestellter Brandschutzkanal, der genauso aufgebaut ist wie der Brandschutzkanal 1. Somit findet das Kanalvolumen des Brandschutzkanals 1 seine Fortsetzung in dem in den Figuren nicht dargestellten weiteren Brandschutzkanal, der mit seinem einen Ende an den Stoß des Brandschutzkanals 1 grenzend wand- oder deckenseitig montiert ist. Der Stoßspalt wird durch eine Brandschutzkanalstoßabdichtung innenseitig abgedichtet. Diese Stoßabdichtung wird bei dem dargestellten Ausführungsbeispiel durch zwei Seitenteile 8, 8.1, ein Bodenteil 9 und ein Deckelteil 10 bereitgestellt.

Die Seitenteile 8, 8,1 sind identisch. Die Seitenteile 8, 8.1 sind Stahlblechstanzbiegeteile. Jedes Seitenteil 8, 8.1 verfügt über einen Rücken 11, 11.1, dessen Höhe im Wesentlichen der Höhe der Seitenwand 3 bzw. 3.1 des Brandschutzkanals 1 entspricht. Im Bereich des oberen Abschlusses verfügt jedes Seitenteil 8, 8.1 über eine Passung 12, 12.1, die im Querschnitt U-förmig ausgeführt ist. An dem jeweiligen Rücken 11 bzw. 11.1 ist ein Dichtmaterialstreifen 13, 13.1 aus einem geeigneten Schaummaterial angeordnet, der den Stoßspalt überbrückt. Bei dem dargestellten Ausführungsbeispiel sind als Dichtmaterialstreifen 13, 13.1 solche aus Schaumstoff vorgesehen, die auf den jeweiligen Rücken 11 bzw. 11.2 aufgeklebt sind. Die Dichtmaterialstreifen 13, 13.1 sind kaltrauchbeständig. Die Dichtmaterialstreifen 13, 13.1 erstrecken sich bis über die Oberseite der jeweiligen Passung 12, 12.1. Die Querschnittsgeometrie jeder Passung, 12, 12.1 ist an die Geometrie einer durch die Deckelanschlussschiene 5, 5.1 mit der benachbarten Seitenwand 3, 3.1 bereitgestellten Seitenteilaufnahme 14, 14.1 angepasst. Die nach innen weisende Seite der Passungen 12, 12.1 trägt von dem jeweiligen Rücken 11 bzw. 11.1 weggerichtete Vorsprünge 15, die bei dem dargestellten Ausführungsbeispiel als ausgestellte Laschen ausgeführt sind. Die Anpassung der Geometrie der Passungen 12, 12.1 an diejenige der Seitenteilaufnahmen 14, 14.1 ist derart vorgesehen, dass die Vorsprünge 15 an der zu der jeweiligen Seitenwand 3 bzw. 3.1 weisenden, nicht mit einer Intumeszenzmateriallage beschichteten Wand der jeweiligen Deckelanschlussschiene 5, 5.1 anliegen.

Die Seitenteile 8, 8.1 verfügen jeweils über zwei Verriegelungslaschen 16, 16.1. Diese sind gegenüber der Ebene des jeweiligen Rückens 11, 11.1 in Richtung zum Inneren des Brandschutzkanals 1 ausgestellt, und zwar mit ihrem zu seinem Boden 2 weisenden Ende. Die Seitenteile 13, 13.1 weisen als unterseitigen Abschluss eine nach innen gerichtete Abkantung 17, 17.1 auf. Mit dieser steht jedes Seitenteil 13, 13.1 auf der Oberseite des Bodens 2 im montierten Zustand auf.

Bei dem Bodenteil 9 handelt es sich ebenfalls um ein Stahlblechstanzbiegeteil mit weitestgehend ebener Erstreckung. Lediglich die in Längserstreckung des Brandschutzkanals 1 weisenden Endseiten sind zum jeweiligen Boden 2 hin geneigt. Das Bodenteil 9 trägt in seiner Mitte einen Dichtmaterialstreifen 18 aus demselben Material wie die Dichtmaterialstreifen 13, 13.1 der Seitenteile 8, 8.1.

Der Stoßabdichtung zugehörig ist ferner das Deckelteil 10, bei dem es sich ebenfalls um ein Stahlblechstanzbiegeteil handelt. Das Deckelteil 10 verfügt über eine Deckelplatte 19. Die Deckelplatte 19 weist einen sich quer zur Längserstreckung des Brandschutzkanals 1 verlaufenden, vertieften Abschnitt auf, in dem ein Dichtmaterialstreifen 20 angeordnet ist. An seinem einen Ende trägt das Deckelteil 10 in Querrichtung jeweils ein abragendes Hakenelement 21, 21.1. Die Hakenelemente 21, 21.1 untergreifen die Deckelanschlussschienen 5, 5.1 im montierten Zustand. Die Deckelplatte 19 verfügt an jeder Längsseite über Auflagefortsätze 22, 22.1 mit denen das Deckelteil 9 auf der Oberseite der inneren Wand der jeweiligen Deckelanschlussschiene 5 bzw. 5.1 aufliegt. Der Auflagefortsatz 22.1 weist einen daran angeformten abgewinkelten Schenkel 23 auf, der in die jeweilige Deckelanschlussschiene 5, 5.1 eingreift. Dieser Schenkel 23 dient als Verriegelungsschenkel für einen in den Deckelanschlussschienen 5, 5.1 zu verriegelnden Deckel 24. Der Deckel 24 selbst verfügt über seitlich abgekantete, der Längserstreckung des Deckels 24 folgende Seitenwangen 25, 25.1, die zum Eingreifen in die Deckelschienen 5, 5.1 dienen. Die Seitenwangen 25, 25.1 tragen unterseitig einen zu der jeweiligen anderen Seitenwange 25.1 bzw. 25 abgekanteten Verriegelungsschenkel 26, 26.1. Dieser untergreift die Schenkel 23 des Deckelteils 10 und weitere, gegebenenfalls in den Deckelanschlussschienen 5, 5.1 eingesetzte Verriegelungsklammern.

Auch das Deckelteil ist unterseitig mit einer Intumeszenzmateriallage 4 beschichtet.

Die Ausbildung der Stoßabdichtung zwischen zwei stirnseitig aneinander grenzende Brandschutzkanäle 1 erfolgt werkzeuglos und ohne Einsatz zusätzlicher Verbindungselemente, wie beispielsweise Schrauben oder dergleichen.

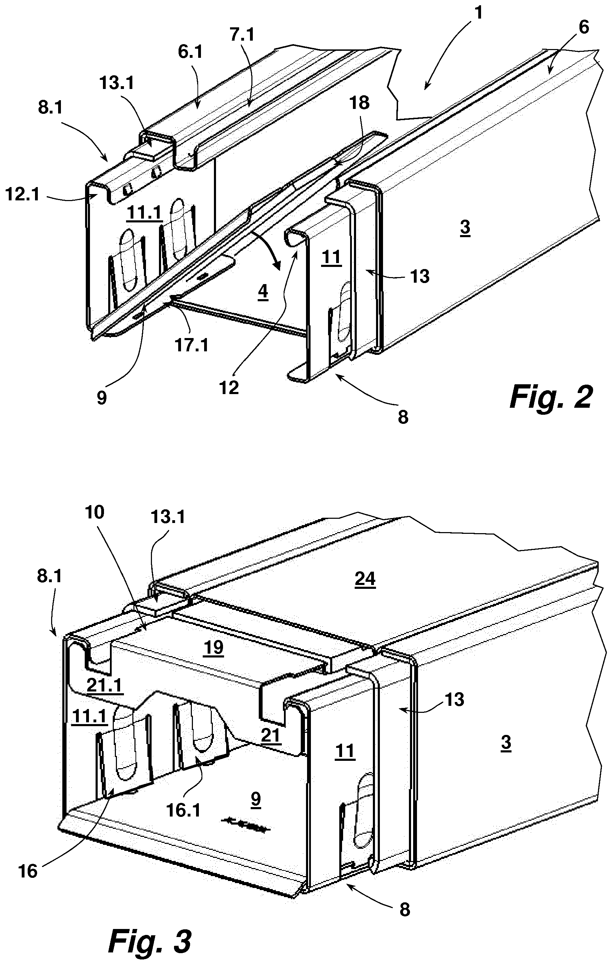

Figur 2 zeigt den Brandschutzkanal 1 mit den bereits darin mit der Hälfte ihrer Längserstreckung eingesetzten Seitenteilen 3, 3.1. Diese greifen mit ihrer jeweiligen Passung 12, 12.1 in die Seitenteilaufnahme 14, 14.1 des Brandschutzkanals 1 ein, wie aufgrund der Perspektive vor allem an dem Seitenteil 8.1 erkennbar. Erkennbar ist die Abstützung der jeweiligen Abkantung 17, 17.1 an der Oberseite des mit dem Intumeszenzmaterial 4 beschichteten Bodens 2. In diese Position sind die Seitenteile 8, 8.1 durch einen Schwenkvorgang gebracht worden. Bei diesem wird zunächst die jeweilige Passung 12 bzw. 12.1 in die diesbezügliche Seitenteilaufnahme 14 bzw. 14.1 ein- bzw. angelegt und dann mit seinem unteren Ende in Richtung zu der jeweiligen Seitenwand 3, 3.1 des Brandschutzkanals 1 verschwenkt.

Figur 2 zeigt auch die Montage des Bodenteils 9, welches ebenfalls in seine montierte Stellung durch einen Schwenkvorgang eingebracht wird. Durch diesen Schwenkvorgang wird das Bodenteil 9 zwischen die Seitenteile 8, 8.1 im Bereich ihres bodenseitigen Abschlusses eingespannt, sodass durch das Bodenteil 9 auf die Seitenteile 8, 8.1 in Querrichtung zur Kanallängserstreckung eine Vorspannung und damit auf den jeweiligen Dichtmaterialstreifen 13, 13.1 ausgeübt wird. Ist das Bodenteil 9 in seine Endstellung geschwenkt worden, untergreift dieses die Verriegelungslaschen 16, 16.1 der Seitenteile 8, 8.1. Der an dem Bodenteil 9 befindliche Dichtmaterialstreifen 18 weist eine Dicke auf, dass dieser, wenn das Bodenteil 9 unter den Verriegelungslaschen 16, 16.1, wie in Figur 3 gezeigt, verriegelt ist, unter Vorspannung gestellt ist. Aufgrund der Materialelastizität des Dichtmaterialstreifens 18 ist das Bodenteil 9 sodann spielfrei zwischen den Verriegelungslaschen 16, 16.1 und dem Boden 2 gehalten. In Querrichtung dazu wird die Spielfreiheit durch die unter Vorspannung gestellten Dichtmaterialstreifen 13, 13.1 bereitgestellt.

Im Bereich ihres oberen Abschlusses ist die Anordnung der Seitenteile 8, 8.1 durch das bereits zuvor beschriebene Eingreifen ihrer Passungen 12, 12.1 in die jeweilige Seitenteilaufnahme 14, 14.1 definiert.

Das Deckelteil 10 ist anschließend zum Untergreifen der Deckelanschlussschienen 5, 5.1 mit seinen Hakenelementen 21, 21.1 montiert worden. Die Hakenelemente 21, 21.1 sind ausgeführt, damit diese auch in die nach unten offenen Passungen 12, 12.1 der Seitenteile 8, 8.1 eingreifen können. In Figur 3 ist zudem der Deckel 24 montiert. Die durch die Teile 8, 8.1, 9 und 10 gebildete Stoßabdichtung ragt hälftig aus dem Brandschutzkanal 1 heraus. Mit dem aus dem Brandschutzkanal 1 herausragenden Abschnitt greift die Stoßabdichtung in den anderen, in den Figuren nicht dargestellten Brandschutzkanal ein.

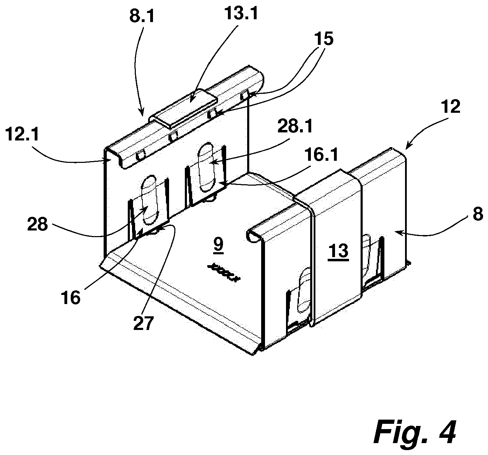

Figur 4 zeigt in einer perspektivischen Ansicht die kanalseitige Stoßabdichtung, gebildet aus den beiden Seitenteilen 8, 8.1 und dem Bodenteil 9, in Montagestellung. Das Bodenteil 9 verfügt über Aussparungen 27, 27.1 an seinen Längsseitenkanten. Diese dienen zum erleichterten Einführen des Bodenteils 9 über die mit einer Versteifungssicke 28, 28.1 ausgerüsteten Verriegelungslaschen 16, 16.1. Die Versteifungssicken 28, 28.1 erstrecken sich über den Wurzelbereich der ausgestellten Verriegelungslaschen 16, 16.1 hinaus. Die Aussparung 27, 27.1 dienen auch zur Lageorientierung, da zwischen den beiden Aussparungen 27, 27.1 auf der Unterseite des Bodenteils 9 der Dichtmaterialstreifen 18 angeordnet ist.

Die Erfindung ist anhand von Ausführungsbeispielen beschrieben worden. Ohne den Umfang der geltenden Ansprüche zu verlassen, ergeben sich für einen Fachmann zahlreiche weitere Ausgestaltungsmöglichkeiten, ohne dass diese im Rahmen dieser Ausführungen im Einzelnen erläutert werden müssten.

### Bezugszeichenliste

- 1: Brandschutzkanal
- 2: Boden
- 3, 3.1: Seitenwand
- 4: Intumeszenzmateriallage
- 5, 5.1: Deckelanschlussschiene
- 6, 6.1: Schenkel
- 7, 7.1: Anschlusskanal
- 8, 8.1: Seitenteil
- 9: Bodenteil
- 10: Deckelteil
- 11, 11.1: Rücken
- 12, 12.1: Passung
- 13, 13.1: Dichtmaterialstreifen
- 14, 14.1: Seitenteilaufnahme
- 15: Vorsprung
- 16, 16.1: Verriegelungslasche
- 17, 17.1: Abkantung
- 18: Dichtmaterialstreifen
- 19: Deckelplatte
- 20: Dichtmaterialstreifen
- 21, 21.1: Hakenelement
- 22, 22.1: Auflagefortsatz
- 23: Schenkel
- 24: Deckel
- 25, 25.1: Seitenwange
- 26, 26.1: Verriegelungsschenkel
- 27, 27.1: Aussparung
- 28, 28.1: Versteifungssicke

## Patentansprüche

1. Leitungsführungskanalanordnung mit zwei stirnseitig benachbart zueinander angeordneten Brandschutzkanälen (1) mit jeweils einem Boden (2) und zwei daran angeformten und der Längserstreckung des Kanals (1) folgenden Seitenwänden (3, 3.1) mit jeweils einer Deckelanschlussschiene (5, 5.1), wobei die Deckelanschlussschienen (5, 5.1) ausgehend von einem oberen Abschluss der Kanäle (1) in das Kanalinnere vorspringend ausgeführt sind, sowie einen an den Deckelanschlussschienen (5, 5.1) befestigbaren Deckel (24), wobei der Boden (2) und die Seitenwände (3, 3.1) mit einer Intumeszenzmateriallage (4) ausgerüstet sind, und mit einer Stoßabdichtung zum Abdichten des Stoßspaltes zwischen den benachbart zueinander angeordneten Brandschutzkanälen (1), wobei die Stoßabdichtung als Innenabdichtung ausgeführt ist und diese zwei Seitenteile (8, 8.1), ein Bodenteil (9) und ein Deckelteil (10) umfasst, die jeweils außenseitig ein sich über den Stoßspalt erstreckendes Dichtmaterial (13, 13.1, 18, 20) tragen, welche Seitenteile (8, 8.1) an ihrer vom Boden (2) des Brandschutzkanals (1) wegweisenden Längsseite eine Passung (12, 12.1) zum Kontaktieren der Deckelanschlussschiene (5, 5.1) und im Bereich ihrer bodenseitigen Längsseite wenigstens eine zum Kanalinneren hin bodenseitig ausgestellte Verriegelungslasche (16, 16.1) tragen, wobei die Deckelanschlussschiene (5, 5.1) weitestgehend U-förmig mit ihrer Öffnung nach oben weisend ausgeführt ist und eine intumeszenzmaterialfreie Wand mit einer Außenseite aufweist, wobei die Seitenteile (8, 8.1) die Passung zum Kontaktieren der Außenseite der intumeszenzmaterialfreien Wand tragen, wobei die Passung (12, 12.1) an den Seitenteilen (8, 8.1) als U-förmige Abwinklung des Endabschnittes der Seitenteile (8, 8.1) ausgeführt ist, wobei die Passung (12, 12.1) in ihrer Dimensionierung ausgelegt ist, dass das von dem Seitenteil (8, 8.1) rückseitig getragene Dichtmaterial (13, 13.1, 18, 20) nach Einführen der Passung (12, 12.1) des Seitenteils (8, 8.1) in die Seitenteilaufnahme (14, 14.1) des Brandschutzkanals (1) mit Vorspannung gegen die Innenseite der Seitenwand (3, 3.1) des Brandschutzkanals (1) wirkt und wobei die Passung (12, 12.1) des Seitenteils (8, 8.1) der Stoßabdichtung gegen die intumeszenzmaterialfreie Außenseite der Deckelanschlussschiene (5, 5.1) mit Vorspannung wirkt und sich ein nicht ausgestellter Bereich der Seitenteile (8, 8.1) über einen zum Brandschutzkanalboden (2) weisenden Abschluss der zumindest einen Verriegelungslasche (16, 16.1) hinaus erstreckt und eine Anlage für längsseitige Stirnflächen des zwischen den Seitenteilen montierten Bodenteils (9) bildet, welches Bodenteil (9) die wenigstens eine Verriegelungslasche (16, 16.1) jedes Seitenteils (8, 8.1) untergreift und an den Anlagen der Seitenteile (8, 8.1) abgestützt ist und welches Deckelteil (10) eine sich über die Breite der deckelseitigen Öffnung des Brandschutzkanals (1) erstreckende Deckelplatte (19), die mit zumindest jeweils einem Auflagefortsatz (22, 22.1) auf einer oberseitigen Stirnfläche der Deckelanschlussschienen (5, 5.1) abgestützt ist.

2. Leitungsführungskanalanordnung nach Anspruch 1, **dadurch gekennzeichnet, dass** eine zu der Wand der Deckelanschlussschiene (5, 5.1) weisende Oberfläche der Passung (12, 12.1) mehrere in einer Reihe angeordnete Vorsprünge (15) trägt.

3. Leitungsführungskanalanordnung nach einem der Ansprüche 1 oder 2, **dadurch gekennzeichnet, dass** sich das außenseitig an den Seitenteilen (8, 8.1) befindliche Dichtmaterial (13, 13.1) über eine gesamte Höhe des Seitenteils (8,8.1) und über einen nach innen gerichteten Schenkel der Passung (12, 12.1) erstreckt.

4. Leitungsführungskanalanordnung nach einem der Ansprüche 1 bis 3, **dadurch gekennzeichnet, dass** die Seitenteile (8, 8.1) bodenseitig eine in Richtung zum Kanalinneren abgewinkelte Abkantung (17, 17.1) als bodenseitigen Stützschenkel aufweisen.

5. Leitungsführungskanalanordnung nach einem der Ansprüche 1 bis 4, **dadurch gekennzeichnet, dass** jedes Seitenteil (8, 8.1) zwei mit Abstand zueinander angeordnete ausgestellte Verriegelungslaschen (16, 16.1) aufweist.

6. Leitungsführungskanalanordnung nach einem der Ansprüche 1 bis 5, **dadurch gekennzeichnet, dass** das Bodenteil (9) an seinen beiden in Längserstreckung der Brandschutzkanäle (1) weisenden Enden einen in Richtung zum Boden (2) des jeweiligen Brandschutzkanals (1) geneigten Endabschnitt aufweist.

7. Leitungsführungskanalanordnung nach einem der Ansprüche 1 bis 6, **dadurch gekennzeichnet, dass** das an den Teilen (8, 8.1, 9. 10) befindliche Dichtmaterial ein kaltrauchbeständiger Schaum ist.

8. Leitungsführungskanalanordnung nach einem der Ansprüche 1 bis 7, **dadurch gekennzeichnet, dass** die beiden Seitenteile (8, 8.1), das Bodenteil (9) und das Deckelteil (10) als separate Teile hergestellt sind und zur Ausbildung der Brandschutzkanalstoßabdichtung die beiden Seitenteile (8, 8.1) mit dem Bodenteil (9) zur Ausbildung eines im Querschnitt U-förmigen Stoßverbinders zusammengesetzt sind.

9. Leitungsführungskanalanordnung nach einem der Ansprüche 1 bis 8, **dadurch gekennzeichnet, dass** die Deckelplatte (19) zwei quer zur Brandschutzkanalerstreckung ausgestellte Hakenelemente (21, 21.1) zum Untergreifen der Deckelanschlussschienen (5, 5.1) der Seitenwände (3, 3.1) aufweist.

10. Leitungsführungskanalanordnung nach einem der Ansprüche 1 bis 9, **dadurch gekennzeichnet, dass** durch das zwischen den Anlagen der Seitenteile (8, 8.1) montierte Bodenteil (9) das von den Seitenteilen (8, 8.1) getragene Dichtmaterial (13, 13.1) mit Vorspannung an die Seitenwandinnenseiten der benachbarten Kanäle (1) hält.

11. Verfahren zur Montage einer Leitungsführungskanalanordnung nach einem der Ansprüche 1 bis 10, umfassend die folgenden Schritte:
- Bereitstellen von zwei rückseitig jeweils einen Dichtmaterialscheiben (13, 13.1) tragenden Seitenteilen (8, 8.1) und einem Bodenteil,
- Ein- bzw. Anlegen einer Passung (12, 12.1) eines Seitenteils (8, 8.1) an die Seitenteilaufnahme (14, 14.1) einer Seitenwand (3, 3.1),
- anschließend Verschwenken des Seitenteils (8, 8.1) mit seinem unteren Ende in Richtung zu der Seitenwand (3, 3.1) des Brandschutzkanals (1) und
- Einschwenken des Bodenteils zwischen die Seitenteile (8, 8.1), sodass das Bodenteil (9) im Bereich des bodenseitigen Abschlusses der Seitenteile (8, 8.1) eingespannt ist und durch das Bodenteil (9) auf die Seitenteile (8, 8.1) in Querrichtung zur Kanallängserstreckung eine Vorspannung und damit auf den jeweiligen Dichtmaterialstreifen (13, 13.1) ausgeübt wird, wobei das Bodenteil in seiner Endstellung die Verriegelungslaschen (16, 16.1) der Seitenteile (8, 8.1) untergreift.

## Claims

1. Line-guiding channel arrangement with two fire-protected channels (1) arranged adjacent to one another on the face side, in each case with a base (2) and two side walls (3, 3.1) formed on the base and following the longitudinal extension of the channel (1), each with a cover connection rail (5, 5.1), wherein the cover connection rails (5, 5.1), starting from an upper termination of the channels (1), are configured so as to project into the channel interior, as well as a cover (24) which can be secured to the cover connection rails (5, 5.1), wherein the base (2) and the side walls (3, 3.1) are provided with an intumescent material layer (4), and with a joint seal for sealing the joint gap between the fire-protected channels (1) arranged adjacent to one another, wherein the joint seal is configured as an interior seal, and these two side walls (8, 8.1) comprise a base part (9) and a cover part (10), which in each case carry on the outside a sealing material (13, 13.1,18, 20) extending over the joint gap, said side parts (8, 8.1) carrying on their longitudinal side, facing away from the base (2) of the fire-protected channel (1), a fit element (12, 12.1) for forming contact with the cover connection rails (5, 5.1), and, in the region of their base-side longitudinal side, at least one locking tab (16, 16.1) formed on the base side and projecting to the interior of the channel, wherein the cover connection rail (5, 5.1) is configured as far as possible in a U-shape, with its opening pointing upwards, and comprises a wall, free of intumescent material and with an outer side, wherein the side parts (8, 8.1) carry the fit element for forming contact with the outer side of the wall which is free of intumescent material, wherein the fit element (12, 12.1) is configured at the side parts (8, 8.1) as a U-shaped angled part of the end section of the side parts (8, 8.1), and wherein the fit element (12, 12.1) is configured in its dimensions such that the sealing material (13, 13.1, 18, 20), carried on the rear side by the side part (8, 8.1), after the introduction of the fit element (12, 12.1) of the side part (8, 8.1) into the side part receiving aperture (14, 14.1) of the fire-protected channel (1) takes effect under preliminary tension against the inner side of the side wall (3, 3.1) of the fire-protected channel (1), and wherein the fit element (12, 12.1) of the side part (8, 8.1) of the joint seal takes effect with preliminary tension against the outer side of the cover connection rails (5, 5.1) which is free of intumescent material, and a region, not shown, of the side parts (8, 8.1) extends outwards over a termination part, facing the base (2) of the fire-protected channel, of the at least one locking tab (16, 16.1), and forms a contact for longitudinal-side face surfaces of the base part (9), which is mounted between the side parts, said base part (9) engaging beneath the at least one locking tab (16, 16.1) of each side part (8, 8.1), and is supported at the contact points of the side parts (8, 8.1), and the said cover part (10) is a cover plate (19), extending over the width of the cover-side opening of the fire-protected channel (1), which is supported in each case by at least one support extension element (22, 22.1) on an upper-side face surface of the cover connection rails (5, 5.1).

2. Line-guiding channel arrangement according to claim 1, **characterised in that** a surface of the fit element (12, 12.1) facing the wall of the cover connection rails (5, 5.1) carried several projections (15) arranged in a row.

3. Line-guiding channel arrangement according to any one of claims 1 or 2, **characterised in that** the sealing material (13, 13.1) located on the outside at the side parts (8, 8.1) extends over the entire height of the side part (8, 8.1) and over a limb pointing inwards of the fit element (12, 12.1)

4. Line-guiding channel arrangement according to any one of claims 1 to 3, **characterised in that** the side parts (8, 8.1) comprise on the base side an inclined part (17, 17.1) angled in the direction towards the interior of the channel, as a base-side support limb.

5. Line-guiding channel arrangement according to any one of claims 1 to 4, **characterised in that** each side part (8, 8.1) comprises two locking tabs (16, 16.1) arranged at a distance interval from one another.

6. Line-guiding channel arrangement according to any one of claims 1 to 5, **characterised in that** the base part (9) comprises, at both of its ends pointing in the longitudinal extension direction of the fire-protected channels (1), an end section inclined in the direction towards the base (2) of the respective fire-protected channel (1).

7. Line-guiding channel arrangement according to any one of claims 1 to 6, **characterised in that** the sealing material provided at the parts (8, 8.1, 9, 10) is a cold smoke-resistant foam.

8. Line-guiding channel arrangement according to any one of claims 1 to 7, **characterised in that** the two side parts (8, 8.1), the base part (9), and the cover part (10) are produced as separate parts, and, for the formation of the fire-protected channel seal, the two side parts (8, 8.1) are assembled together with the base part (9) in order to form a joint connector which is U-shaped in cross-section.

9. Line-guiding channel arrangement according to any one of claims 1 to 8, **characterised in that** the cover plate (19) comprises two hook elements (21, 21.1) arranged transversely to the fire-protected channel extension, for engaging beneath the cover connection rails (5, 5.1) of the side walls (3, 3.1).

10. Line-guiding channel arrangement according to any one of claims 1 to 9, **characterised in that,** by means of the base part (9) mounted between the contact points of the side walls (8, 8.1), the sealing material (13, 13.1) carried by the side parts (8, 8.1) is held under preliminary tension to the inner sides of the side walls of the adjacent channels (1).

11. Method for assembling a line-guiding channel arrangement according to any one of claims 1 to 10, comprising the following steps:
- provision of two side parts (8, 8.1), each carrying on the rear side a sealing material disk (13, 13.1), and a base part,
- insertion or fitting of a fit element (12, 12.1) of a side part (8, 8.1) into the side part receiving aperture (14, 14.1) of a side wall (3, 3.1),
- subsequent pivoting of the side part (8, 8.1) with its lower end in the direction towards the side wall (3, 3.1) of the fire-protected channel (1), and
- pivoting inwards of the base part between the side parts (8, 8.1), such that the base part (9) is tensioned in the region of the base-side termination of the side parts (8, 8.1), and, by the base part (9), a preliminary tension is exerted onto the side parts (8, 8.1) in the transverse direction to the channel longitudinal extension, and therefore onto the respective sealing material strips (13, 13.1), wherein the base part in its final position engages beneath the locking tabs (16, 16.1) of the side parts (8, 8.1).

## Revendications

1. Système de conduit pour chemin de câble constitué de deux conduits coupe-feu (1) disposés frontalement l'un à côté de l'autre, comportant chacun un fond (2) et, moulées sur ce dernier, deux parois latérales (3, 3.1) suivant l'étendue longitudinale du conduit (1), lesquelles comportent chacune un rail de fixation de couvercle (5, 5.1), lesquels rails de fixation de couvercle (5, 5.1) sont conformés en saillie vers l'intérieur du conduit en partant de l'extrémité supérieure des conduits (1), et comportant un couvercle (24) qui peut être fixé sur les rails de fixation de couvercle (5, 5.1), le fond (2) et les parois latérales (3, 3.1) étant munis d'une couche de matériau intumescent (4) et d'une étanchéité de joint afin de réaliser l'étanchéité de la fente au droit du joint entre les conduits coupe-feu (1) disposés l'un à côté de l'autre, l'étanchéité de joint étant conformée en tant qu'étanchéité interne et comportant deux pièces latérales (8, 8.1), une pièce de fond (9) et une pièce de couvercle (10), lesquelles supportent chacune un matériau d'étanchéité (13, 13.1, 18, 20) s'étendant sur la face extérieure au-dessus de la fente au droit du joint, lesquelles pièces latérales (8, 8.1) portent, sur leur côté longitudinal opposé au fond (2) du conduit coupe-feu (1), un élément d'adaptation (12, 12.1) destiné à entrer en contact avec le rail de fixation de couvercle (5, 5.1), et au niveau de leur côté longitudinal du côté fond au moins une patte de verrouillage (16, 16.1) en saillie vers l'intérieur du conduit, vers le côté fond, lesquels rails de fixation de couvercle (5, 5.1) étant configurés sensiblement en forme de U, avec leur ouverture orientée vers le haut, et présentant une paroi exempte de matériau intumescent avec une face extérieure, les pièces latérales (8, 8.1) supportant l'élément d'adaptation destiné à entrer en contact avec la face extérieure de la paroi exempte de matériau intumescent, l'élément d'adaptation (12, 12.1) de la pièce latérale (8, 8.1) étant conformé en tant pliure angulaire en forme de U sur le tronçon d'extrémité des pièces latérales (8, 8.1), l'élément d'adaptation (12, 12.1) étant dimensionné de telle sorte que le matériau d'étanchéité (13, 13.1, 18, 20) supporté au dos de la pièce latérale (8, 8.1) agit, après introduction de l'élément d'adaptation (12, 12.1) de la pièce latérale (8, 8.1) dans le logement de la pièce latérale (14, 14.1) du conduit coupe-feu (1), avec une pré-tension contre la face intérieure de la paroi latérale (3, 3.1) du conduit coupe-feu (1) et que l'élément d'adaptation (12, 12.1) de la pièce latérale (8, 8.1) de l'étanchéité au droit du joint agit, avec pré-tension, contre la face extérieure exempte de matériau intumescent du rail de fixation de couvercle (5, 5.1) et qu'un tronçon non saillant des pièces latérales (8, 8.1) s'étend sur une terminaison, orientée vers le fond (2) du conduit coupe-feu, d'au moins une patte de verrouillage (16, 16.1) et forme un appui pour les faces frontales longitudinales de la pièce de fond (9) montée entre les pièces latérales, laquelle pièce de fond (9) saisit par le dessous l'au moins une patte de verrouillage (16, 16.1) de chaque pièce latérale (8, 8.1) et s'appuie contre les appuis des pièces latérales (8, 8.1) et laquelle pièce de couvercle (10) comprenant, sur l'étendue de la largeur de l'ouverture du côté couvercle du conduit coupe-feu (1), une plaque (19) de couvercle laquelle est en appui par au moins une languette d'appui (22, 22.1) sur une surface frontale située sur le dessus du rail de fixation de couvercle (5, 5.1).

2. Système de conduit pour chemin de câble selon la revendication 1, **caractérisé en ce qu'**une surface de l'élément d'adaptation (12, 12.1) orientée vers la paroi du rail de fixation de couvercle (5, 5.1) supporte plusieurs éléments saillants (15) disposés en ligne.

3. Système de conduit pour chemin de câble selon l'une des revendications 1 ou 2, **caractérisé en ce que** le matériau d'étanchéité (13, 13.1) situé sur la face extérieure sur les pièces latérales (8, 8.1) s'étend sur toute une hauteur de la pièce latérale (8, 8.1) et sur un montant orienté vers l'intérieur de l'élément d'adaptation (12, 12.1).

4. Système de conduit pour chemin de câble selon l'une des revendications 1 à 3, **caractérisé en ce que** les pièces latérales (8, 8.1) présentent côté fond une pliure angulaire (17, 17.1) en direction de l'intérieur du conduit, faisant office de montant d'appui côté fond.

5. Système de conduit pour chemin de câble selon l'une des revendications 1 à 4, **caractérisé en ce que** chaque pièce latérale (8, 8.1) comporte deux pattes de verrouillage (16, 16.1) en saillie disposées à distance l'une de l'autre.

6. Système de conduit pour chemin de câble selon l'une des revendications 1 à 5, **caractérisé en ce que** la pièce de fond (9) présente, à ses deux extrémités orientées vers l'étendue longitudinale des conduits coupe-feu (1), un tronçon d'extrémité incliné en direction du fond (2) de chaque conduit coupe-feu (1).

7. Système de conduit pour chemin de câble selon l'une des revendications 1 à 6, **caractérisé en ce que** le matériau d'étanchéité situé sur les pièces (8, 8.1, 9, 10) est une mousse résistante aux fumées froides.

8. Système de conduit pour chemin de câble selon l'une des revendications 1 à 7, **caractérisé en ce que** les deux pièces latérales (8, 8.1), la pièce de fond (9) et la pièce de couvercle (10) sont fabriquées en tant que pièces séparées et que, pour réaliser une étanchéité de joint entre conduits coupe-feu, les deux pièces latérales (8, 8.1) sont assemblées avec la pièce de fond (9) en formant un raccord de jonction avec une section en forme de U.

9. Système de conduit pour chemin de câble selon l'une des revendications 1 à 8, **caractérisé en ce que** la plaque de couvercle (19) présente deux crochets (21, 21.1) saillants perpendiculairement par rapport à l'étendue du conduit coupe-feu destinés à saisir par le dessous les rails de fixation de couvercle (5, 5.1) des parois latérales (3, 3.1).

10. Système de conduit pour chemin de câble selon l'une des revendications 1 à 9, **caractérisé en ce que,** grâce à la pièce de fond (9) montée entre les appuis des pièces latérales (8, 8.1), le matériau d'étanchéité (13, 13.1) supporté par les pièces latérales (8, 8.1) est maintenu avec une pré-tension contre les faces intérieures des parois latérales des conduits (1) voisins.

11. Procédé de montage d'un système de conduit pour chemin de câble selon l'une des revendications 1 à 10, comportant les étapes suivantes :
- mise à disposition de deux pièces latérales et d'une pièce de fond supportant respectivement au dos une tranche (13, 13.1) de matériau d'étanchéité,
- mise en place ou ajustement d'un élément d'adaptation (12, 12.1) d'une pièce latérale (8, 8.1) dans le logement de pièce latérale (14, 14.1) d'une paroi latérale (3, 3.1),
- suivie du basculement d'une pièce latérale (8, 8.1) par son extrémité inférieure en direction de la paroi latérale (3, 3.1) du conduit coupe-feu (1) et
- engagement par basculement de la pièce de fond entre les pièces latérales (8, 8.1), de sorte que la pièce de fond (9) est enserrée au niveau de la terminaison côté fond des pièces latérales (8, 8.1) et qu'une pré-tension est exercée dans le sens perpendiculaire à l'étendue longitudinale du conduit par la pièce de fond (9) sur les pièces latérales (8, 8.1) et par conséquent sur la bande respective de matériau d'étanchéité (13, 13.1), la pièce de fond, dans sa position finale, saisissant par le dessous les pattes de verrouillage (16, 16.1) des pièces latérales (8, 8.1).
